(19) Europäisches Patentamt
European Patent Office
Office européen des brevets

(11) Publication number: 0 046 816
A1

(12) EUROPEAN PATENT APPLICATION

(21) Application number: 80105185.5

(22) Date of filing: 01.09.80

(51) Int. Cl.³: B 01 D 13/04
A 61 M 1/03

(43) Date of publication of application:
10.03.82 Bulletin 82/10

(84) Designated Contracting States:
AT BE CH DE FR GB IT LI LU NL SE

(71) Applicant: GAMBRO, INC. American Membrane Division
1450 Industrial Park Street
Covina, CA. 91722(US)

(72) Inventor: Cantor, Paul A.
4033 Hollyknoll Dr.
Los Angeles, CA 90027(US)

(72) Inventor: Higley, Willard S.
837 Huerta Verde Rd.
Glendora, CA 91740(US)

(72) Inventor: Fisher, Bruce S.
1564 Wanamaker Dr.
Covina, CA 91724(US)

(74) Representative: Boberg, Gunnar
HOLGER CRAFOORD AB Patent Department Box 10101
S-220 10 Lund(SE)

(54) **Polycarbonate hemofiltration membrane and method of hemofiltering using such a membrane.**

(57) Thin membranes for hemofiltration prepared from polycarbonate materials, having increased transport for middle molecules without a high pressure drop across the membrane as compared to cellulosic membranes, an ultrafiltration rate of about 7 to 20 ml/hr/M²/mm Hg and a thickness of from about 0.5 mil to 1.5 mils.

EP 0 046 816 A1

0046816

TITLE MODIFIED see front page

TITLE

# POLYCARBONATE HEMOFILTRATION MEMBRANE

## BACKGROUND OF THE INVENTION

Heretofore, it has been known to utilize polycarbonate membranes to perform hemodialysis. This procedure involves the gradual removal (at an ultrafiltration rate generally less than about 4.0 ml/hr/$M^2$/mm Hg measured at 37°C) of $H_2O$ accompanied by the diffusion of sodium chloride and various middle molecules which are byproducts of the metabolism of protein. Such membranes, their manufacture and use, are disclosed and claimed in United States Patent No. 4,075,108 and United States Patent No. 4,069,151. Subsequently, as used herein, the term "hemodialysis" refers generally to the method of dialyzing a patient by mounting a membrane in a hemodialyzer; connecting the hemodialyzer to a patient so that blood can be removed from the patient, passed through the hemodialyzer and returned to the patient in a closed loop; removing blood from a patient; passing the blood through a hemodialyzer wherein the blood is brought into contact with one face of a membrane within said hemodialyzer while the opposite face of the membrane is in contact with dialyzing fluid such as a solution of electrolytes and glucose in sterile water; and returning the hemodialyzed blood to the patient. Bulk transfer of fluid (water) containing dissolved salts and middle molecules is accompanied by diffusion of the salts and middle molecules through the membrane into the dialyzate. In the case of the two patents indentified above, the particular improvement resides in the use in the hemodialyzer of a membrane prepared by a wet phase inversion technique using an aqueous gelation system, the membrane being composed of a polyether-polycarbonate block copolymer having a molecular weight within the range of from about 200,000 to 500,000 as determined by intrinsic viscosity measurement, containing 5 to 35% by weight of

repeating alkylene ether carbonate units and from 95 to about 65% by weight of repeating bisphenol A-carbonate units, the membrane having an ultrafiltration rate measured at 37°C, of about 1 to 5 ml/hr/$M^2$/mm Hg and a thickness of from about 0.6 mil to about 1.5 mils, and preferably from 0.6 mil to 0.95 mil.

Hemodialysis in some patients has been found to result in irregular heartbeat, blood pressure fluctuation and fluid imbalance. The problems are believed to be due to electrolyte imbalance and homeostatic disturbances. Hemodialysis is also somewhat slow because of the rather low ultrafiltration rate involved. Since most patients having need of hemodialysis require the treatment regularly and at frequent intervals, often several times weekly, the time required for a treatment looms as a major factor both to the patient and to the facility providing treatment.

It is already known in the art that hemofiltration can be carried out using certain membranes of a cellulose nature (sold under the trademark "Cuprophan"). However, these hemofilters require for their operation a high pressure drop across the membrane, on the order of 700 mm Hg. The problems with Cuprophan are several. First, its ultrafiltration rate is so low that to achieve a reasonable removal, higher surface areas and high transmembrane pressure (TMP) drops are required. The high surface area requires a high extracorporeal blood volume, while the high TMP increases the risk of failure of the membrane comprising the blood compartment through either a seal failure or burst from excessive stretching through inadequate support.

We have now found that a new polycarbonate membrane, as more fully hereinafter described, has a substantially greater ultrafiltration rate at the normal pressure drop used in hemodialysis (150 mm - 250 mm Hg) and can be used in "hemofiltration" which is used herein to mean

an in vivo procedure differing from hemodialysis in that when the blood passes through the hemofilter and the blood is brought into contact with one face of the novel polycarbonate membrane mounted therein, no liquid or dialysis fluid is present or being circulated in contact with the opposite face of the membrane and the concentration of dissolved salts and middle molecules is less than in hemodialysis but the total amount of water containing dissolved salts and middle molecules removed per hour can be greater. In addition in hemofiltration, a vacuum is pulled on the side of the membrane opposite the side in contact with blood. Using the novel polycarbonate membranes of this invention, the ultrafiltration rate is about 2-1/2 to 5 times greater than with a polycarbonate hemodialysis membrane even though the driving force for the flow through the membrane is only 150 mm - 250 mm Hg. The mechanism of hemofiltration is one of bulk transfer of fluid containing dissolved salts and middle molecules through the membrane. By way of contrast, in hemodialysis, as noted above, the lower bulk transfer through the membrane is accompanied by diffusion of the salts and middle molecules through the membrane.

A surprising result obtained with the hemofiltration membrane of this invention is that essentially no protein loss accompanies the high ultrafiltration rate.

Hemofiltration can be accompanied by continuous reinfusion of fluid containing desirable molecules such as some electrolyte potassium and sodium salts by intravenous administration of Ringer's lactate solution or, alternatively, following a short period of hemofiltration, an additional period of hemodialysis is carried out with minimal water removal with little or no TMP.

The advantage incident the practice of either of these alternatives involving hemofiltration is that the overall treatment more nearly approximates the normal renal function. In the normal kidney, bulk fluid removal

including dissolved electrolyte salts and middle molecules takes place by glomerular filtration followed by partial reabsorption of a considerable amount of the filtrate during its passage through the proximal tubule, the loop of Henle, and the distal tubule. As a result, physiologically necessary amounts of water and electrolytes are reabsorbed into the blood stream, and urea, creatine, water and excess electrolytes are rejected. Similarly, in the two alternatives presented hereinabove there is (1) a bulk removal of fluid followed by reinfusion of electrolytes; or (2) a lesser period of bulk removal (and lesser removal of electrolytes and middle molecules) followed by the further removal of excess electrolytes and middle molecules by diffusion.

## SUMMARY OF THE INVENTION

Briefly, the present invention comprises an improved hemofiltration membrane prepared by a wet phase inversion technique using an aqueous gelation system, said membrane composed of a polyether-polycarbonate block copolymer containing 5 to 35% by weight of repeating alkylene ether carbonate units and from 95 to about 65% by weight of repeating bisphenol A-carbonate units, said membrane being adaptable for use in a hemofiltration apparatus to preferentially remove middle molecular weight molecules from blood, wherein said membrane has a diffusive permeability to vitamin $B_{12}$ measured at $37^oC$ of from about 135 to 175 cm/min x $10^{-4}$, an ultrafiltration rate of at least 7 ml/hr/$M^2$/mm Hg, the ultrafiltration rate measured at $37^oC$, and a thickness of from about 0.50 mil to about 1.50 mils.

This invention also comprehends a method of hemofiltering a patient comprising mounting a membrane in a hemofilter; connecting the hemofilter to a patient so that blood can be removed from the patient, passed through the hemofilter and returned to the patient in a closed

loop; removing blood from a patient; passing the blood through a hemofilter wherein the blood is brought into contact with one face of a membrane mounted within the hemofilter while the opposite face of the membrane is free of fluids, and returning the hemofiltered blood to the patient; the improvement being the use in the hemofilter of a membrane prepared by a wet phase inversion technique using an aqueous gelation system, said membrane composed of a polyether-polycarbonate block copolymer having a molecular weight within the range of from about 200,000 to 500,000 as determined by intrinsic viscosity measurement, containing 5 to 35% by weight of repeating alkylene ether carbonate units and from 95 to about 65% by weight of repeating bisphenol A-carbonate units, said membrane having a diffusive permeability to vitamin $B_{12}$ measured at 37°C of from about 135 to 175 cm/min $\times 10^{-4}$, an ultrafiltration rate measured at 37°C, at least 7 ml/hr/$M^2$/mm Hg and a thickness of from about 0.5 mil to about 1.5 mils.

It is therefore an object of the present invention to provide hemofiltration membranes having improved permeability to solutes in the middle molecule range as compared with presently available cellulosic membranes and an increased ultrafiltration rate when compared with polycarbonate hemodialysis membranes.

A further object of this invention is to provide a membrane which can be used in a treatment which more nearly approaches normal renal function.

Another object of the invention is to provide hemofiltration membranes which are stronger than the standard NIAMDD reference membranes while having the same thickness.

Still another object of the invention is to provide a process for producing gelled polycarbonate membranes useful for hemofiltration and having the improved properties as set forth in the preceding objects, which is easily and economically adaptable to large scale machine production.

These and other objects and advantages of this invention will be apparent from the more detailed description which follows.

DESCRIPTION OF PREFERRED EMBODIMENTS

The above and other objects may be achieved in accordance with the present invention by producing a gelled polycarbonate hemofiltration membrane from a polyether-polycarbonate block copolymer by the phase inversion technique employing an aqueous gelation system with water as the gelling medium and a water-miscible organic solvent as the casting solvent. More specifically, this process comprises casting on to a substrate surface having a smooth finish, a layer of casting solution comprising a polyether-polycarbonate block copolymer containing from about 5 to about 35% by weight of the polyether component and a water-miscible organic solvent together with a cosolvent which acts as a swelling agent for the copolymer, drying the layer to partially evaporate the solvent therefrom, immersing the partially dried layer in water to form a gelled membrane, and stripping the resulting gelled membrane from the substrate surface.

The gelled polycarbonate membranes produced in this manner, with water as the gelling medium, are formed with their barrier layer on the side of the membrane facing the air during drying which enables the gelled membrane to be readily stripped from the casting surface without impairing the integrity of the delicate barrier layer, thereby rendering large-scale machine production of such membranes practical. The use of water as a gelling medium facilitates large scale machine production in that water is, of course, less expensive, non-toxic and non-flammable, and also eliminates the necessity for the extensive flushing or washing of the membrane to remove the gelling medium therefrom as was required in methanol gelation. The water-gelled polycarbonate membranes have considerably

higher strength than either methanol-gelled polycarbonate membranes or Cuprophan membranes.

The polycarbonate material from which the improved hemofiltration membranes are fabricated in accordance with the present invention is a polyether-polycarbonate block copolymer preferably containing from about 5 to about 35% by weight of the polyether component. It has been found that this proportion of polyether blocks renders the normally hydrophobic polycarbonate sufficiently hydrophilic so as to make it suitable for use as a hemodialysis membrane. Certain of such block copolymers may be prepared wherein a comonomer mixture of from about 95 to about 65% by weight of 2,2-(4,4'-dihydroxydiphenyl)propane, generally known as bisphenol A, and correspondingly from about 5 to about 35% by weight of a polyether glycol such as polyethylene glycol, is reacted with a carbonic acid derivative such as phosgene. A polyethylene glycol which is found to be particularly suitable is Carbowax 6000, which is a polyethylene glycol having an average molecular weight of 6700, although polyethylene glycols of other molecular weights can also be used, such as, for example, Carbowax 600, Carbowax 1000 and Carbowax 4000, which are polyethylene glycols having molecular weights of 600, 1000 and 4000, respectively.

In accordance with the above, the polyether-polycarbonate block coplymer consists of recurring units of the formula:

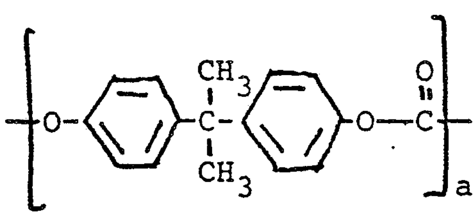

I

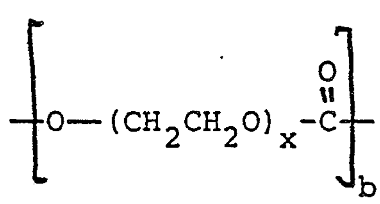

II

wherein x is from about 12 to about 152 and a and b are chosen such that the bisphenol A carbonate unit (I) is

about 95 to 65% of the weight of the recurring unit and the alkylene ether carbonate unit (II) is about 5 to 35% of the weight of the recurring unit. Polyether glycols other than polyethylene glycols can also be used, such as, for example, polypropylene oxide-polyethylene oxide block copolymers as exemplified by members of the Pluronic diol series such as Pluronic F68.

Polyether-polycarbonate block copolymers having molecular weights ranging from about 50,000 to about 750,000 may suitably be prepared in the above manner. A preferred range of molecular weights is from about 200,000 to about 500,000, since it has been found that membranes fabricated in accordance with the present invention from polyether-polycarbonate block copolymers having molecular weights within such preferred range exhibit ultrafiltration rates comparable to those of Cuprophan membranes but without the need for the establishment of a pressure differential across the membrane.

Suitable casting solutions for use in producing membranes of the present invention may be prepared by dissolving the polyether-polycarbonate block copolymer is a water-miscible organic solvent for the copolymer. The solvent preferably has a boiling point within the range of $50^{o}$ to $85^{o}C$ for optimum room temperature casting. The preferred solvent is 1,3-dioxolane which has the appropriate combination of high solvent power for the copolymer, suitable vapor pressure at $25^{o}C$, water-miscibility and a boiling point of $75^{o}$ to $76^{o}C$. Other suitable solvents which can be employed include 1,3-dioxan, 1,4-dioxan, tetrahydrofuran, butyrolactone, acetonitrile, cellosolve acetate, dimethylformamide, pyridine and mixtures thereof.

The casting solutions are generally formulated to have a total solids content of from about 1 to about 20 weight percent to give dopes ranging in viscosity from about 5,000 to about 30,000 cps. Typically, solids

contents range from about 10 to about 20 weight percent to give viscosities of from about 7,000 to about 25,000 cps, the preferred range. A swelling agent, such as dimethyl sulfoxide, is advantageously added to the casting solution in amounts ranging from about 10 to about 75% by weight of the copolymer, the preferred range being from about 15 to about 25% by weight of the copolymer. The addition of the swelling agent has been found to enhance the permeability of the resulting membrane. Other swelling agents which have been employed include dimethylformamide, dimethylacetamide, acetamide, formamide and pyridine.

Production of the polycarbonate membrane can be effected on a continuous basis by doctor blade casting of the casting solution onto a moving surface having a smooth finish, such as a coated release paper. The well-filtered (10 μm) casting solution is preferably supplied to a hopper placed in front of the doctor blade by means of a positive displacement metering pump. The hopper is provided with end guides for controlling the width of the membrane sheet. The thickness of the membrane sheet is controlled by adjusting the gap between the knife and the moving belt surface.

The freshly cast and wet film is allowed to air dry at temperatures ranging from about 20° to about 30°C for periods ranging from about 1.0 to about 5.0 minutes to partially evaporate the solvent therefrom, the drying time being determined by both the belt speed and the drying distance. The partially dried film is gelled to produce the final membrane by immersion while still adhering to the moving belt, in a water bath. The gelation bath temperature may be varied about zero to about 40°C, the preferred range being 20 to 30°C. After gelation, the membrane is peeled from the moving belt and rolled up separately from the belt onto a cylindrical core.

In one embodiment, the treatment of the polycarbonate membrane to attain the ultrafiltration rate of at least

7 $ml/hr/M^2/mm$ Hg preferably involves the exposure of the membrane to sodium hypochlorite solution (20 cc of Clorox per liter of aqueous dipping solution). The pH of the solution is usually between 8.5 and 10.5. The immersion time is preferably between 30 and 60 minutes. The solution temperature normally falls within the range from ambient to about 50$^{\circ}$C.

Another procedure for increasing the ultrafiltration rate to the desired level is by stretching the dry membrane, particularly by uniaxial and/or biaxial orientation of about 35%. This can be done most effectively by the use of pairs of spaced-apart rollers with the membrane passing through each pair of rollers in an "S"-like manner and the rollers operating at different speeds to thereby stretch the membrane as it passes between the pairs of rollers. Simultaneously biaxial stretching can be accomplished by mechanically gripping of the sides of the membrane and applying transverse tension.

Yet another procedure which yields the desired ultrafiltration rate involves dipping the membrane in a swelling agent such as glycerin or other polyols, viz, propylene glycol, dipropylene glycol, tripropylene glycol and higher polymers of propylene glycol, triethylene glycol, polyethylene glycols which are polymers of ethylene oxide and have the general formula $HO{-}(CH_2{-}CH_2{-}O)_n{-}H$ where n equals 4 to 20, polymers of propylene oxide having the formula $HO{-}(\overset{CH_3}{\overset{|}{C}H}{-}CH_2{-}O)_m{-}H$ where m equals 3 to 20, polyether glycols containing ethylene oxide and propylene oxide units (commonly known as Pluronics, such as Pluronic F-68 supplied by BASF-Wyandotte), methoxy derivatives of said polyethylene glycols, sucrose and glucose. Preferably, this embodiment is practiced by passing the membrane through a plurality of baths containing progressively increasing amounts of the polyol.

The final thickness of the membrane generally varies from about 0.50 to 1.5 mils, and preferably from 0.60 to 0.95 mil, depending upon the knife gap setting, casting solution viscosity, belt speed, and final permeability-increasing method used.

The following examples are intended merely to illustrate the invention.

EXAMPLE 1

A mixture of 2,860 gm of the polyether-polycarbonate block copolymer obtained by reacting phosgene with a comonomer mixture of bisphenol A (75 wt %) and Carbowax 6000 (25 wt %), and having an intrinsic viscosity of 1.57 (in chloroform at 25°C) corresponding to a molecular weight of 320,200, 18,092 gm of 1,3-dioxolane and 572.0 gm of dimethyl sulfoxide, was slowly agitated until solution was effected (approximately 16 hours). The crude solution was filtered in a pressure filter at 60 psig through a stainless steel nominal 1.5 μm filter cartridge to remove a small residue of fine insoluble matter. The resulting casting solution has a viscosity of 9,713 cps at 25°C.

Approximately 5 gallons of the above filtered casting solution was cast via a doctor blade onto the surface of a 25-inch wide moving belt moving at a speed of about 3.5 feet per minute. The hopper end guides were set to provide a cast film width of 15-1/2 inches and the gap between the doctor knife and the moving belt surface was set at approximately 7.0 mils and adjusted during production to produce a membrane of final wet thickness of 0.80 ± 0.05 mils. The casting solution is passed through a shroud 42 inches long x 38 inches wide x 6-1/2 inches high through which nitrogen at 235 SCFH is passed. A total drying time for the cast film of about 1.7 minutes was allowed before gelation in a water bath. The ambient air temperature was maintained at 25.0° ± 0.5°C and the gelation water bath temperature at 25° ± 0.5°C. After

gelation, the resulting membrane was peeled from the moving belt and rolled up separately from the belt onto a cylindrical core. The membrane was washed in a flowing stream of deionized water and stored in a sealed polyethylene bag containing 2% aqueous formaldehyde.

A wet gelled polycarbonate membrane prepared in the manner just described having an average ultrafiltration rate of 3.4 ml/hr/$M^2$/mm Hg, a $B_{12}$ permeability of 105 cm/min x $10^{-4}$, both measured at 37°C and a thickness of 0.79 mil is immersed in a solution of sodium hypochlorite made by diluting commercial Clorox (20cc) with 1000 cc of tap water. The solution has a pH of 8.85. The solution is 54.4°C and the membrane is immersed for 30 minutes followed by thorough washing in cool tap water.

The resulting membrane had an ultrafiltration rate of 7.2 ml/hr/$M^2$/mm Hg, a $B_{12}$ permeability of 128 cm/min x $10^{-4}$, both measured at 37°C and a thickness of 0.84 mil.

EXAMPLE 2

In this example, a wet-gelled polycarbonate membrane prepared as described in fore part of Example 1 was uniaxially stretched by hand by about 35%.

Table No. 1

MECHANICAL PROPERTIES OF ORIENTED MEMBRANES

| Membrane No. | Type | Tensile (PSI) | Yield (PSI) | Percent Elong. | Modulus (PSI) |
|---|---|---|---|---|---|
| 1 | Dry Control (not stretched) | 4391 | 1464 | 269 | 28298 |
| 2 | Oriented Lengthwise | 5250 | 1768 | 194 | 33471 |
| 3 | Oriented Lengthwise | 7215 | 2494 | 159 | 37731 |

Table No. II

PERMEABILITY PROPERTIES OF ORIENTED MEMBRANES

| Membrane No. | Type | UFR[x] | $B_{12}$[xx] | Thick (Mils) | Burst (cm Hg) |
|---|---|---|---|---|---|
| 4 | Uniaxially oriented | 9.3 | 149 | 0.58 | 24.0 |
| 5 | Biaxially oriented | 8.3 | 136 | 0.54 | 26.2 |
| 6 | Control (dry) (not stretched) | 4.5 | 116 | 0.81 | 28.7 |

---

[x] ml/hr/$M^2$/mm Hg at 37°C

[xx] cm/min x $10^{-4}$ at 37°C.

EXAMPLE 3

In this example, a wet-gelled polycarbonate membrane as described in the fore part of Example 1 was dipped into a first bath containing 50% aqueous ethanol, then into a second bath of 100% ethanol, then into a third bath containing a solution of glycerin in ethanol (47% glycerin by weight), and finally a bath containing 48% glycerin by weight in ethanol. The immersion time in each bath is about 2 minutes. The membrane is air-blown dry.

When the membrane was rewetted, the following results were obtained.

Table No. III

| Membrane No. | Type | UFR | $B_{12}$ | Thickness |
|---|---|---|---|---|
| 7 | Control (never dried in the baths) | 5.21 | 94 | 0.67 |
| 8 | Dried in the above-described baths | 14.9 | N.D.[xxx] | 0.71 |
| 9 | Dried in the above-described baths | 16.1 | N.D.[xxx] | 0.56 |
| 10 | Dried in the above-described baths | 12.6 | N.D.[xxx] | 0.67 |

$^{xxx}$Value not determined

EXAMPLE 4

In a manner similar to Example 3, the following baths were used with a residence time per bath of about 90 seconds.

First Bath - 50/50% $H_2O$/Ethanol

Second Bath - 100% Ethanol

Third Bath - 50/50% Glycerin/Etahnol

Fourth Bath - 52/48% Glycerin/Etahnol.

When the membrane was rewetted, the following results were obtained.

Table No. IV

| Membrane No. | Type | UFR | Thickness |
|---|---|---|---|
| 11 | Control (never in the baths) | 5.21 | 0.67 |
| 12 | Dried in the above-described baths | 10.45 | 0.73 |
| 13 | Dried in the above-described baths | 8.9 | 0.70 |

EXAMPLE 5

A three-bath system was used, the first bath containing 50/50% Isopropyl Alcohol and Water. The second bath contained 100% Isopropyl Alcohol. The third bath contained 40/60% glycerin/Isopropyl Alcohol. The immersion time was 10 minutes.

When the membranes were rewetted, the following data were obtained.

Table No. V

| Membrane No. | Type | UFR | Thickness |
|---|---|---|---|
| 14 | Control (never dried in the baths) | 6.0 | 0.73 |
| 15 | Dried in the above-described baths | 11.4 | 0.83 |

When the immersion time was 5 minutes, the following results were obtained.

| | | | |
|---|---|---|---|
| 16 | Dried in the above-described baths | 11.8 | 0.79 |

When the immersion time was 7 minutes, the results were:

| | | | |
|---|---|---|---|
| 17 | Dried in the above-described baths | 14.7 | 0.83 |

In all of the above Examples, the ultrafiltration rates were measured with a solution containing albumin as a typical protein. No loss of albumin through the membrane occurred.

Having fully described the invention, it is intended that it be limited only by the lawful scope of the appended claims.

CLAIMS

1. An improved membrane prepared by a wet phase inversion technique using an aqueous gelation system, said membrane composed of a polyether-polycarbonate block copolymer containing 5 to 35% by weight of repeating alkylene ether carbonate units and from 95 to about 65% by weight of repeating bisphenol A-carbonate units, said membrane being adaptable for use in a hemofiltration apparatus to preferentially remove middle molecular weight molecules from blood, wherein said membrane has a diffusive permeability to vitamin $B_{12}$ measured at 37°C of from about 135 to 175 cm/min x $10^{-4}$, an ultrafiltration rate of at least 7 ml/hr/$M^2$/mm Hg, the ultrafiltration rate measured at 37°C, and a thickness of from about 0.50 mil to about 1.50 mils.

2. The membrane of claim 1 wherein the polyether-polycarbonate block copolymer contains 15 to 35% by weight, preferably 5-35% by weight, of repeating alkylene ether carbonate units and from 85 to 65% by weight of repeating bisphenol A-carbonate units.

3. The membrane of claim 1 or 2 having an ultrafiltration rate of from about 10 to 20 ml/hr/$M^2$/mm Hg, the ultrafiltration rate measured at 37°C.

4. The membrane of any one of claims 1-3 having a thickness from about 0.6 to 0.95 mil.

5. The membrane of any one of claims 1-4 prepared by immersion of a wet gelled membrane in an aqueous solution of sodium hypochlorite.

6. The membrane of any one of claims 1-4 prepared by stretching the membrane along at least one axis.

7. The membrane of any one of claims 1-4 prepared by swelling the membrane in a polyol.

8. A method of hemofiltering a source of comprising:

a. mounting a membrane in a hemofilter;

b. connecting said hemofilter to said source of blood so that blood can be removed from the source, passed through the hemofilter and returned to the source in a closed loop;

c. removing blood from said source of blood;

d. passing said blood through a hemofilter wherein the blood is brought into contact with one face of a membrane mounted within said hemofilter while the opposite face of the membrane is free of fluids, and returning the hemofiltered blood to said source of blood;

the improvement being the use in the hemofilter of a membrane prepared by a wet phase inversion technique using an aqueous gelation system, said membrane composed of a polyether-polycarbonate block copolymer having a molecular weight within the range of from about 200,000 to 500,000 as determined by intrinsic viscosity measurement, containing 5 to 35% by weight of repeating alkylene ether carbonate units and from 95 to about 65% by weight of repeating bisphenol A-carbonate units, said membrane having a diffusive permeability to vitamin $B_{12}$ measured at 37°C of from about 135 to 175 cm/min x $10^{-4}$, an ultrafiltration rate measured at 37°C, at least 7 ml/hr/$M^2$/mm Hg and a thickness of from about 0.5 mil to about 1.5 mils.

9. The method of claim 8 wherein the polyether-polycarbonate block copolymer contains 15 to 35% by weight, preferably from 5 to 35% by weight, of repeating alkylene ether carbonate units and from 85 to 65% by weight of repeating bisphenol A-carbonate units..

10. The method of claim 8 or 9 having an ultrafiltration rate of from about 10 to 20 ml/hr/$M^2$/mm Hg, the ultrafiltration rate measured at 37°C.

11. The method of any one of claims 8-10 having a thickness from about 0.6 to 0.95 mil.

12. The method of any one of claims 8-11 wherein hemofiltration is accompanied by re-infusion with water containing physiologically acceptable quantities of electrolytes.

13. The method of any one of claims 8-12 wherein hemofiltration is followed by dialysis.

0046816

Application number

European Patent Office

# EUROPEAN SEARCH REPORT

EP 80 10 5158

| DOCUMENTS CONSIDERED TO BE RELEVANT | | | CLASSIFICATION OF THE APPLICATION (Int Cl 3) |
|---|---|---|---|
| Category | Citation of document with indication, where appropriate, of relevant passages | Relevant to claim | |
| X | DE - A - 2 921 138 (ASAHI MEDICAL CO. LTD.)<br>* Claims 1,2,5; page 12, line 28 - page 13, line 5; page 17, example 5 *<br>& GB - A - 2 047 161<br>-- | 1-4, 6,7 | B 01 D 13/04<br>A 61 H 1/03 |
| EX | EP - A - 0 024 600 (AKZO GmbH) 11-03-1981<br>* Claims 1,6,18; page 7, lines 17-25, table I *<br>-- | 1-4, 7-11 | |
| | | | TECHNICAL FIELDS SEARCHED (Int. Cl.3) |
| D | US - A - 4 075 108 (W.S. HIGLEY)<br>* Claims 1,14; table 2, example 3 *<br>-- | 1-3 | B 01 D 13/04<br>A 61 M 1/03<br>C 08 G 63/66 |
| | FR - A - 2 344 315 (C.R. BARD INC.)<br>* Claims 1,2; table 2, example 2 *<br>& GB - A - 1 556 898<br>-- | 1-3 | |
| | FR - A - 2 265 807 (THE GOVERNMENT OF THE U.S.)<br>* Claims 1,12; table 2, example 2 *<br>& GB - A - 1 500 937<br>-- | 1-3 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | US - A - 4 160 791 (W.S. HIGLEY)<br>* Claim 1; table 2, example 3 *<br>-- ./. | 1-3 | |
| X | The present search report has been drawn up for all claims | | &: member of the same patent family, corresponding document. |

| Place of search | Date of completion of the search | Examiner |
|---|---|---|
| The Hague | 15-05-1981 | HOORNAERT |

EPO Form 1503.1 06.78

European Patent Office

# EUROPEAN SEARCH REPORT

Application number
EP 80 10 5185
-2-

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | TRANS. AMER. SOC. ARTIF. INT. ORGANS, vol. XIX, 1973, B.S. FISHER et al. "Modified polycarbonate membranes for hemodialysis", pages 429-434. * Complete document * -- | 1 | |
| A | JOURNAL MACROMOL. SCI.:-CHEM. A4(3), May 1970 New York, USA R.E. KESTING "Control of polymer morphology for biomedical applications. I. Hydrophilic polycarbonate membranes for dialysis", pages 655-664. -- | | TECHNICAL FIELDS SEARCHED (Int. Cl.3) |
| DA | US - A - 4 069 151 (W.S. HIGLEY) | | |
| A | FR - A - 2 200 035 (CALGON CORP.) & US - A - 3 901 810 & GB - A - 1 451 621 | | |
| A | EP - A - 0 012 630 (TEIJIN LTD.) | | |
| A | EP - A - 0 002 053 (HOECHST AG. KALLE) | | |
| A | INDUSTRIAL AND ENGINEERING CHEMISTRY: PRODUCT RESEARCH AND DEVELOPMENT. vol. 28, March 1969, no. 1 Washington, USA K.D. VOS et al. "Drying cellulose acetate reverse osmosis membranes", pages 84-89. ---- | 7 | |